# EUROPEAN PATENT SPECIFICATION

(11) **EP 4 172 726 B1**
(45) Date of publication and mention of the grant of the patent: **28.10.2026**
(21) Application number: 21732795.6
(22) Date of filing: 04.06.2021
(51) Int. Cl.: G06F 3/01, G06F 3/16, G10L 15/22

(54) **AUGMENTED REALITY EXPERIENCES USING SPEECH AND TEXT CAPTIONS**
ERFAHRUNGEN DER ERWEITERTEN REALITÄT UNTER VERWENDUNG VON SPRACH- UND TEXTUNTERTITELN
EXPÉRIENCES DE RÉALITÉ AUGMENTÉE UTILISANT DES LÉGENDES VOCALES ET TEXTE

(30) Priority: 29.06.2020 US 202063045537 P; 18.12.2020 US 202017126207
(43) Date of publication of application: 03.05.2023
(73) Proprietor: Snap Inc., Santa Monica, CA 90405 (US)
(72) Inventor: CANBERK, Ilteris, Santa Monica, CA 90405 (US); KANG, Shin, Hwun, Santa Monica, CA 90405 (US); MORENO, Daniel, Santa Monica, CA 90405 (US)
(74) Representative: Oryon NV
(86) International application number: PCT/US2021/035840
(87) International publication number: WO 2022/005693

(56) References cited:
- US-A1- 2015 169 052
- US-A1- 2016 027 218
- US-A1- 2016 357 252
- US-A1- 2019 139 426
- US-A1- 2019 286 231
- US-A1- 2020 118 456
- US-A1- 2020 174 566
- ANONYMOUS: "Dragon Naturally Speaking: Installation and User Guide", 1 January 2012 (2012-01-01), pages 1 - 290, XP055277700, Retrieved from the Internet <URL:http://www.nuance.com/ucmprod/groups/dragon/@web-enus/documents/collateral/nc_025216.pdf> [retrieved on 20160603]

## Description

### CROSS-REFERENCE TO RELATED APPLICATIONS

This application claims priority to U.S. Provisional Application Serial No. 63/045,537 filed on June 29, 2020, and U.S. Application Serial No. 17/126,207 filed on December 18, 2020.

### TECHNICAL FIELD

Examples set forth in the present disclosure relate to the field of augmented reality (AR) and wearable mobile devices such as eyewear devices. More particularly, but not by way of limitation, the present disclosure describes user interaction with virtual images to provide augmented reality experiences that utilize speech, text captions, or both.

### BACKGROUND

Many types of computers and electronic devices available today, such as mobile devices *(e.g.,* smartphones, tablets, and laptops), handheld devices, and wearable devices *(e.g.,* smart glasses, digital eyewear, headwear, headgear, and head-mounted displays), include a variety of cameras, sensors, wireless transceivers, input systems (e.g., touch-sensitive surfaces, pointers), peripheral devices, displays, and graphical user interfaces (GUIs) through which a user can interact with displayed content.

Augmented reality (AR) combines real objects in a physical environment with objects in a virtual environment and displays the combination to a user. The combined display gives the impression that the objects are authentically present in the environment, especially when the objects appear and behave like the real objects. Examples of prior art work are US 2016/357252 A1, US 2020/174566 A1, and US 2019/139426 A1.

Advanced AR technologies, such as computer vision and object tracking, may be used to produce a perceptually enriched and immersive experience. Computer vision algorithms extract three-dimensional data about the physical world from the data captured in digital images or video. Object recognition and tracking algorithms may be used to detect an object in a digital image or video, estimate its orientation or pose, and track its movement over time.

The invention is defined by the appended independent claims. Further embodiments are defined by the dependent claims.

### BRIEF DESCRIPTION OF THE DRAWINGS

Features of the various examples described will be readily understood from the following detailed description, in which reference is made to the figures. A reference numeral is used with each element in the description and throughout the several views of the drawing. When a plurality of similar elements is present, a single reference numeral may be assigned to like elements, with an added lower-case letter referring to a specific element.

The various elements shown in the figures are not drawn to scale unless otherwise indicated. The dimensions of the various elements may be enlarged or reduced in the interest of clarity. The several figures depict one or more implementations and are presented by way of example only and should not be construed as limiting. Included in the drawing are the following figures:
FIG. 1A is a side view (right) of an example hardware configuration of an eyewear device suitable for use in an augmented reality production system;
FIG. 1B is a perspective, partly sectional view of a right corner of the eyewear device of FIG. 1A depicting a right visible-light camera, and a circuit board;
FIG. 1C is a side view (left) of an example hardware configuration of the eyewear device of FIG. 1A, which shows a left visible-light camera;
FIG. 1D is a perspective, partly sectional view of a left corner of the eyewear device of FIG. 1C depicting the left visible-light camera, and a circuit board;
FIGS. 2A and 2B are rear views of example hardware configurations of an eyewear device utilized in the augmented reality production system;
FIG. 3 is a diagrammatic depiction of a three-dimensional scene, a left raw image captured by a left visible-light camera, and a right raw image captured by a right visible-light camera;
FIG. 4 is a functional block diagram of an example augmented reality production system including a wearable device *(e.g.,* an eyewear device) and a server system connected via various networks;
FIG. 5 is a diagrammatic representation of an example hardware configuration for a mobile device of the augmented reality production system of FIG. 4;
FIG. 6 is a schematic illustration of a user in an example environment for use in describing simultaneous localization and mapping;
FIG. 7 is a flow chart listing steps in an example method involving generating visual text graphics and presenting the visual text graphic at a predefined location in the physical environment on a display;
FIG. 8 is a flow chart listing steps in an example method including presenting visual text graphics on the display and altering one or more of the properties of the visual text graphic to a defined location in response to input from the user;
FIG. 9 is a flow chart listing steps in an example method including setting the visual text graphic at the predefined location in the display in response to gaze direction of the user, other input from the user, or a combination thereof;
FIGs. 10A and 10B are perspective illustrations of a virtual augmented reality experience using visual text graphics;
FIGs. 11A, 11B, and 11C are perspective illustrations of a virtual augmented reality experience using visual text graphics and altering one or more of the properties of the visual text graphic;
FIGs. 12A and 12B are perspective illustrations of a virtual augmented reality experience using visual text graphics and setting the visual text graphic at the predefined location in the display in response to gaze direction of the user, input from the user, or a combination thereof;
FIGs. 13A and 13B are perspective illustrations of a virtual augmented reality experience using device comprising a microphone and configured to recognize speech received via the microphone wherein recognized speech is converted text displayed as visual text graphics on the display.

### DETAILED DESCRIPTION

Various implementations and details are described with reference to examples including a system for an augmented reality experiences with visual text graphics and voice recognition. The eyewear device includes functionality to convert speech to text or to acquire text in another way. The text may be acquired using a typing accessory from the user such as a keypad or from other users via remote data connection (i.e., internet or broadband network), or from a voice recognition module within the eyewear device. The eyewear device may include functionality to present the text at a predefined location with respect to the eyewear, which is visible to the user through the eyewear. For example, the text may appear in a caption located near the subject speaking the text in the image seen through the eyewear. The eyewear device may include functionality to move the text or text caption in the image by altering gaze direction or hand gestures. The eyewear device may include functionality to capture an image including the text or text caption to be saved or transmitted by the eyewear device.

The following detailed description includes systems, methods, techniques, instruction sequences, and computing machine program products illustrative of examples set forth in the disclosure. Numerous details and examples are included for the purpose of providing a thorough understanding of the disclosed subject matter and its relevant teachings. Those skilled in the relevant art, however, may understand how to apply the relevant teachings without such details. Aspects of the disclosed subject matter are not limited to the specific devices, systems, and method described because the relevant teachings can be applied or practice in a variety of ways. The terminology and nomenclature used herein is for the purpose of describing particular aspects only and is not intended to be limiting. In general, well-known instruction instances, protocols, structures, and techniques are not necessarily shown in detail.

The terms "coupled" or "connected" as used herein refer to any logical, optical, physical, or electrical connection, including a link or the like by which the electrical or magnetic signals produced or supplied by one system element are imparted to another coupled or connected system element. Unless described otherwise, coupled or connected elements or devices are not necessarily directly connected to one another and may be separated by intermediate components, elements, or communication media, one or more of which may modify, manipulate, or carry the electrical signals. The term "on" means directly supported by an element or indirectly supported by the element through another element that is integrated into or supported by the element.

The term "proximal" is used to describe an item or part of an item that is situated near, adjacent, or next to an object or person; or that is closer relative to other parts of the item, which may be described as "distal." For example, the end of an item nearest an object may be referred to as the proximal end, whereas the generally opposing end may be referred to as the distal end.

The orientations of the eyewear device, other mobile devices, associated components and any other devices incorporating a camera, an inertial measurement unit, or both such as shown in any of the drawings, are given by way of example only, for illustration and discussion purposes. In operation, the eyewear device may be oriented in any other direction suitable to the particular application of the eyewear device; for example, up, down, sideways, or any other orientation. Also, to the extent used herein, any directional term, such as front, rear, inward, outward, toward, left, right, lateral, longitudinal, up, down, upper, lower, top, bottom, side, horizontal, vertical, and diagonal are used by way of example only, and are not limiting as to the direction or orientation of any camera or inertial measurement unit as constructed or as otherwise described herein.

Additional objects, advantages and novel features of the examples will be set forth in part in the following description, and in part will become apparent to those skilled in the art upon examination of the following and the accompanying drawings or may be learned by production or operation of the examples. The objects and advantages of the present subject matter may be realized and attained by means of the methodologies, instrumentalities and combinations particularly pointed out in the appended claims.

Reference now is made in detail to the examples illustrated in the accompanying drawings and discussed below.

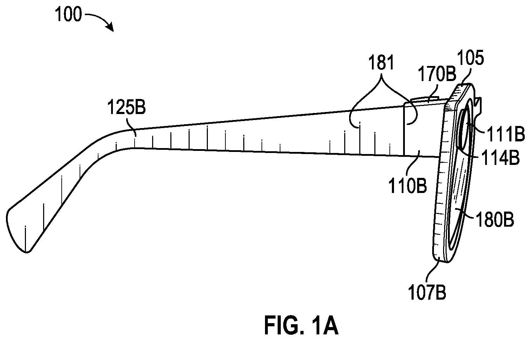

FIG. 1A is a side view (right) of an example hardware configuration of an eyewear device 100 which includes a touch-sensitive input device or touchpad 181. As shown, the touchpad 181 may have a boundary that is subtle and not easily seen; alternatively, the boundary may be plainly visible or include a raised or otherwise tactile edge that provides feedback to the user about the location and boundary of the touchpad 181. In other implementations, the eyewear device 100 may include a touchpad on the left side.

The surface of the touchpad 181 is configured to detect finger touches, taps, and gestures (e.g., moving touches) for use with a GUI displayed by the eyewear device, on an image display, to allow the user to navigate through and select menu options in an intuitive manner, which enhances and simplifies the user experience.

Detection of finger inputs on the touchpad **181** can enable several functions. For example, touching anywhere on the touchpad **181** may cause the GUI to display or highlight an item on the image display, which may be projected onto at least one of the optical assemblies **180A, 180B.** Double tapping on the touchpad **181** may select an item or icon. Sliding or swiping a finger in a particular direction (*e.g.*, from front to back, back to front, up to down, or down to) may cause the items or icons to slide or scroll in a particular direction; for example, to move to a next item, icon, video, image, page, or slide. Sliding the finger in another direction may slide or scroll in the opposite direction; for example, to move to a previous item, icon, video, image, page, or slide. The touchpad **181** can be virtually anywhere on the eyewear device **100.**

In one example, an identified finger gesture of a single tap on the touchpad **181,** initiates selection or pressing of a graphical user interface element in the image presented on the image display of the optical assembly **180A, 180B.** An adjustment to the image presented on the image display of the optical assembly **180A, 180B** based on the identified finger gesture can be a primary action which selects or submits the graphical user interface element on the image display of the optical assembly **180A, 180B** for further display or execution.

As shown, the eyewear device **100** includes a right visible-light camera **114B.** As further described herein, two cameras **114A, 114B** capture image information for a scene from two separate viewpoints. The two captured images may be used to project a three-dimensional display onto an image display for viewing with 3D glasses.

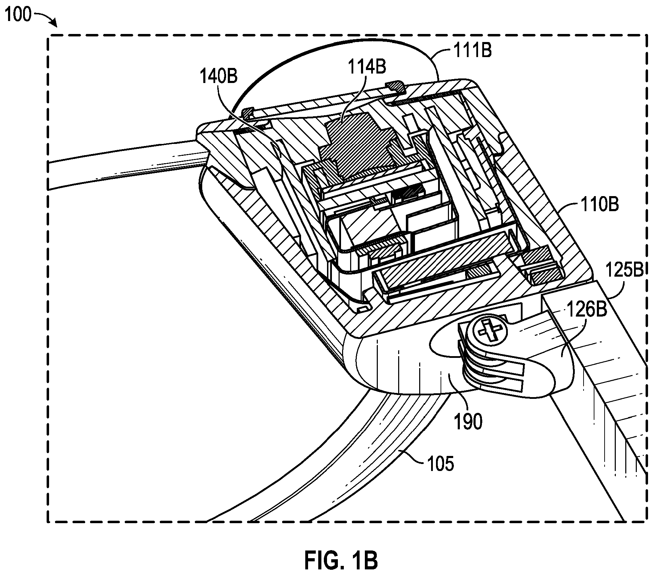

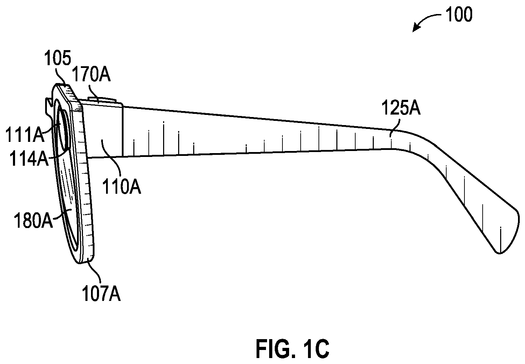

The eyewear device **100** includes a right optical assembly **180B** with an image display to present images, such as depth images. As shown in FIGS. 1A and 1B, the eyewear device **100** includes the right visible-light camera **114B.** The eyewear device **100** can include multiple visible-light cameras **114A, 114B** that form a passive type of three-dimensional camera, such as stereo camera, of which the right visible-light camera **114B** is located on a right corner **110B.** As shown in FIGS. 1C-D, the eyewear device **100** also includes a left visible-light camera **114A.**

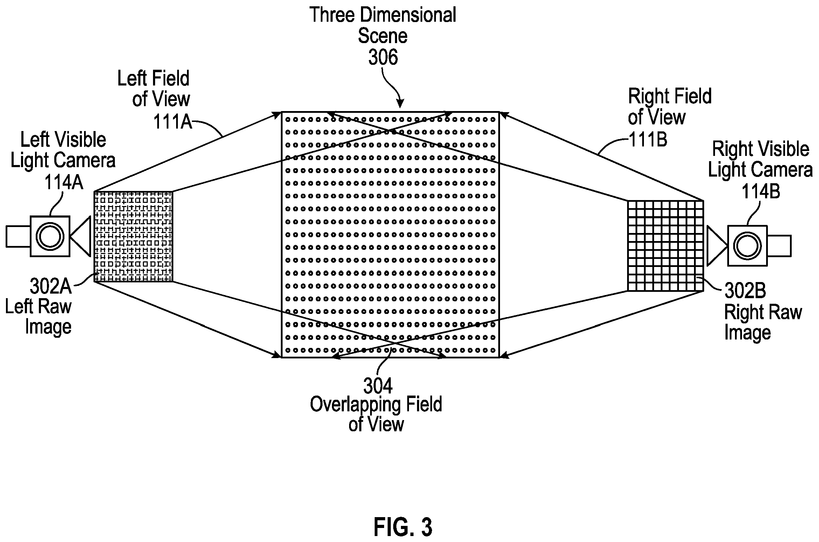

Left and right visible-light cameras **114A, 114B** are sensitive to the visible-light range wavelength. Each of the visible-light cameras **114A, 114B** have a different frontward facing field of view which are overlapping to enable generation of three-dimensional depth images, for example, right visible-light camera **114B** depicts a right field of view **111B.** Generally, a "field of view" is the part of the scene that is visible through the camera at a particular position and orientation in space. The fields of view **111A** and **111B** have an overlapping field of view **304** (FIG. 3). Objects or object features outside the field of view **111A, 111B** when the visible-light camera captures the image are not recorded in a raw image (e.g., photograph or picture). The field of view describes an angle range or extent, which the image sensor of the visible-light camera **114A, 114B** picks up electromagnetic radiation of a given scene in a captured image of the given scene. Field of view can be expressed as the angular size of the view cone; *i.e.,* an angle of view. The angle of view can be measured horizontally, vertically, or diagonally.

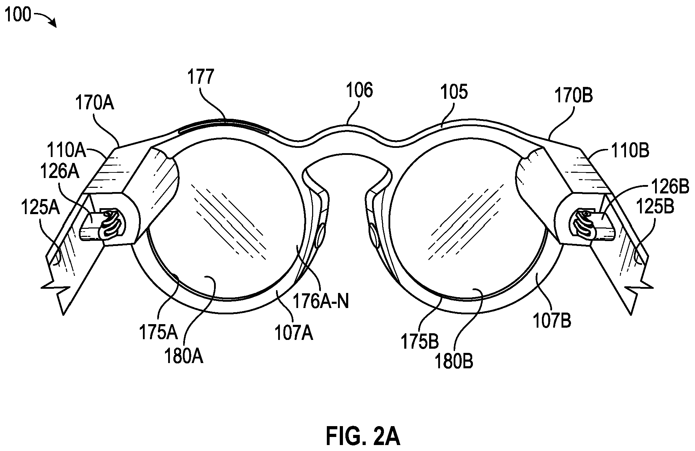

In an example, visible-light cameras **114A, 114B** have a field of view with an angle of view between 15° to 110°, for example 24°, and have a resolution of **480 x 480** pixels or greater. The "angle of coverage" describes the angle range that a lens of visible-light cameras **114A, 114B** or infrared camera **410** (see FIG. 2A) can effectively image. Typically, the camera lens produces an image circle that is large enough to cover the film or sensor of the camera completely, possibly including some vignetting (*e.g.*, a darkening of the image toward the edges when compared to the center). If the angle of coverage of the camera lens does not fill the sensor, the image circle will be visible, typically with strong vignetting toward the edge, and the effective angle of view will be limited to the angle of coverage.

Examples of such visible-light cameras **114A, 114B** include a high-resolution complementary metal-oxide-semiconductor (CMOS) image sensor and a digital VGA camera (video graphics array) capable of resolutions of 640p *(e.g.,* 640 x 480 pixels for a total of 0.3 megapixels), 720p, 1080p, or more. Other examples of visible-light cameras **114A, 114B** that can capture high-definition (HD) still images and store them at a resolution of 1642 by 1642 pixels (or greater); or record high-definition video at a high frame rate (e.g., thirty to sixty frames per second or more) and store the recording at a resolution of 1216 by 1216 pixels (or greater).

The eyewear device **100** may capture image sensor data from the visible-light cameras **114A, 114B** along with geolocation data, digitized by an image processor, for storage in a memory. The visible-light cameras **114A, 114B** capture respective left and right raw images in the two-dimensional space domain that comprise a matrix of pixels on a two-dimensional coordinate system that includes an X-axis for horizontal position and a Y-axis for vertical position. Each pixel includes a color attribute value *(e.g.,* a red pixel light value, a green pixel light value, or a blue pixel light value); and a position attribute (e.g., an X-axis coordinate and a Y-axis coordinate).

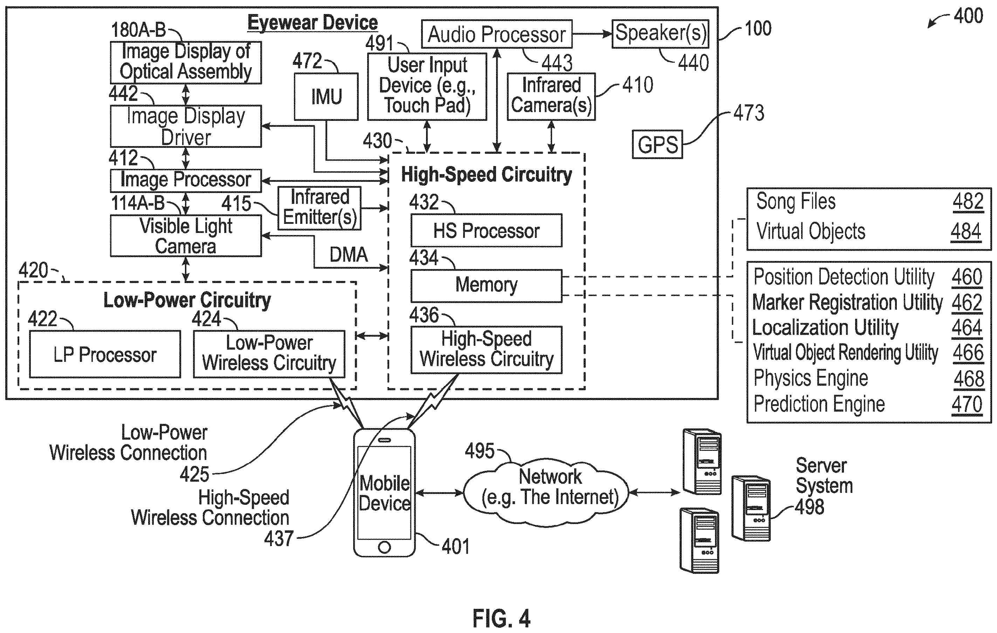

In order to capture stereo images for later display as a three-dimensional projection, the image processor **412** (shown in FIG. 4) may be coupled to the visible-light cameras **114A, 114B** to receive and store the visual image information. The image processor **412,** or another processor, controls operation of the visible-light cameras **114A, 114B** to act as a stereo camera simulating human binocular vision and may add a timestamp to each image. The timestamp on each pair of images allows display of the images together as part of a three-dimensional projection. Three-dimensional projections produce an immersive, life-like experience that is desirable in a variety of contexts, including virtual reality (VR) and video gaming.

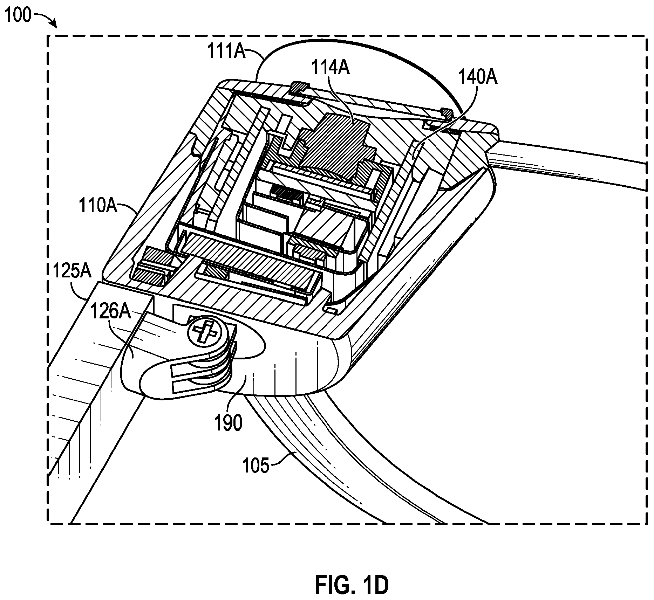

FIG. 1B is a perspective, cross-sectional view of a right corner **110B** of the eyewear device **100** of FIG. 1A depicting the right visible-light camera **114B** of the camera system, and a circuit board. FIG. 1C is a side view (left) of an example hardware configuration of an eyewear device **100** of FIG. 1A, which shows a left visible-light camera **114A** of the camera system. FIG. 1D is a perspective, cross-sectional view of a left corner **110A** of the eyewear device of FIG. 1C depicting the left visible-light camera **114A** of the three-dimensional camera, and a circuit board.

Construction and placement of the left visible-light camera **114A** is substantially similar to the right visible-light camera **114B,** except the connections and coupling are on the left lateral side **170A.** As shown in the example of FIG. 1B, the eyewear device **100** includes the right visible-light camera **114B** and a circuit board **140B,** which may be a flexible printed circuit board (PCB). The right hinge **126B** connects the right corner **110B** to a right temple **125B** of the eyewear device **100.** In some examples, components of the right visible-light camera **114B,** the flexible PCB **140B,** or other electrical connectors or contacts may be located on the right temple **125B** or the right hinge **126B.** Similarly, components of the left visible-light camera 114A, the flexible PCB 140A, or other electrical connectors or contacts may be located on the right temple 125A or the right hinge 126A.

The right corner **110B** includes corner body **190** and a corner cap, with the corner cap omitted in the cross-section of FIG. 1B. Disposed inside the right corner **110B** are various interconnected circuit boards, such as PCBs or flexible PCBs, that include controller circuits for right visible-light camera **114B,** microphone(s), low-power wireless circuitry (*e.g*., for wireless short range network communication via Bluetooth^{™}), high-speed wireless circuitry (*e.g*., for wireless local area network communication via Wi-Fi).

The right visible-light camera **114B** is coupled to or disposed on the flexible PCB **140B** and covered by a visible-light camera cover lens, which is aimed through opening(s) formed in the frame **105.** For example, the right rim **107B** of the frame **105,** shown in FIG. 2A, is connected to the right corner **110B** and includes the opening(s) for the visible-light camera cover lens. The frame 105 includes a front side configured to face outward and away from the eye of the user. The opening for the visible-light camera cover lens is formed on and through the front or outward-facing side of the frame **105.** In the example, the right visible-light camera **114B** has an outward-facing field of view **111B** (shown in FIG. 3) with a line of sight or perspective that is correlated with the right eye of the user of the eyewear device **100.** The visible-light camera cover lens can also be adhered to a front side or outward-facing surface of the right corner **110B** in which an opening is formed with an outward-facing angle of coverage, but in a different outwardly direction. The coupling can also be indirect via intervening components.

As shown in FIG. 1B, flexible PCB **140B** is disposed inside the right corner **110B** and is coupled to one or more other components housed in the right corner **110B.** Although shown as being formed on the circuit boards of the right corner **110B,** the right visible-light camera **114B** can be formed on the circuit boards of the left corner **110A,** the temples **125A, 125B,** or the frame **105.**

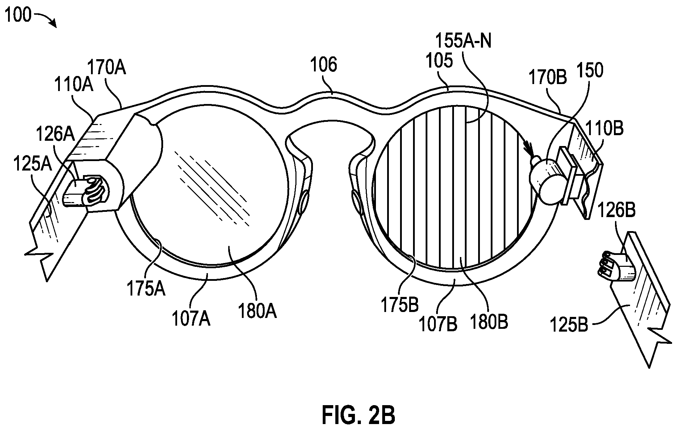

FIGS. 2A and 2B are perspective views, from the rear, of example hardware configurations of the eyewear device **100,** including two different types of image displays. The eyewear device **100** is sized and shaped in a form configured for wearing by a user; the form of eyeglasses is shown in the example. The eyewear device **100** can take other forms and may incorporate other types of frameworks; for example, a headgear, a headset, or a helmet.

In the eyeglasses example, eyewear device **100** includes a frame **105** including a left rim **107A** connected to a right rim **107B** via a bridge 106 adapted to be supported by a nose of the user. The left and right rims **107A, 107B** include respective apertures **175A, 175B,** which hold a respective optical element **180A, 180B,** such as a lens and a display device. As used herein, the term "lens" is meant to include transparent or translucent pieces of glass or plastic having curved or flat surfaces that cause light to converge/diverge or that cause little or no convergence or divergence.

Although shown as having two optical elements **180A, 180B,** the eyewear device **100** can include other arrangements, such as a single optical element (or it may not include any optical element **180A, 180B),** depending on the application or the intended user of the eyewear device **100.** As further shown, eyewear device **100** includes a left corner **110A** adjacent the left lateral side **170A** of the frame **105** and a right corner **110B** adjacent the right lateral side **170B** of the frame **105.** The corners **110A, 110B** may be integrated into the frame **105** on the respective sides **170A, 170B** (as illustrated) or implemented as separate components attached to the frame **105** on the respective sides **170A, 170B.** Alternatively, the corners **110A, 110B** may be integrated into temples (not shown) attached to the frame **105.**

In one example, the image display of optical assembly **180A, 180B** includes an integrated image display. As shown in FIG. 2A, each optical assembly **180A, 180B** includes a suitable display matrix **177,** such as a liquid crystal display (LCD), an organic light-emitting diode (OLED) display, or any other such display. Each optical assembly **180A, 180B** also includes an optical layer or layers **176,** which can include lenses, optical coatings, prisms, mirrors, waveguides, optical strips, and other optical components in any combination. The optical layers **176A, 176B,** ... **176N** (shown as **176A-N** in FIG. 2A and herein) can include a prism having a suitable size and configuration and including a first surface for receiving light from a display matrix and a second surface for emitting light to the eye of the user. The prism of the optical layers **176A-N** extends over all or at least a portion of the respective apertures **175A, 175B** formed in the left and right rims **107A, 107B** to permit the user to see the second surface of the prism when the eye of the user is viewing through the corresponding left and right rims **107A, 107B.** The first surface of the prism of the optical layers **176A-N** faces upwardly from the frame **105** and the display matrix **177** overlies the prism so that photons and light emitted by the display matrix **177** impinge the first surface. The prism is sized and shaped so that the light is refracted within the prism and is directed toward the eye of the user by the second surface of the prism of the optical layers **176A-N.** In this regard, the second surface of the prism of the optical layers **176A-N** can be convex to direct the light toward the center of the eye. The prism can optionally be sized and shaped to magnify the image projected by the display matrix **177,** and the light travels through the prism so that the image viewed from the second surface is larger in one or more dimensions than the image emitted from the display matrix **177.**

In one example, the optical layers **176A-N** may include an LCD layer that is transparent (keeping the lens open) unless and until a voltage is applied which makes the layer opaque (closing or blocking the lens). The image processor 412 on the eyewear device **100** may execute programming to apply the voltage to the LCD layer in order to produce an active shutter system, making the eyewear device **100** suitable for viewing visual content when displayed as a three-dimensional projection. Technologies other than LCD may be used for the active shutter mode, including other types of reactive layers that are responsive to a voltage or another type of input.

In another example, the image display device of optical assembly 180A, 180B includes a projection image display as shown in FIG. 2B. Each optical assembly 180A, 180B includes a laser projector 150, which is a three-color laser projector using a scanning mirror or galvanometer. During operation, an optical source such as a laser projector 150 is disposed in or on one of the temples 125A, 125B of the eyewear device 100. Optical assembly 180B in this example includes one or more optical strips 155A, 155B, ... 155N (shown as 155A-N in FIG. 2B) which are spaced apart and across the width of the lens of each optical assembly 180A, 180B or across a depth of the lens between the front surface and the rear surface of the lens.

As the photons projected by the laser projector 150 travel across the lens of each optical assembly 180A, 180B, the photons encounter the optical strips 155A-N. When a particular photon encounters a particular optical strip, the photon is either redirected toward the user's eye, or it passes to the next optical strip. A combination of modulation of laser projector 150, and modulation of optical strips, may control specific photons or beams of light. In an example, a processor controls optical strips 155A-N by initiating mechanical, acoustic, or electromagnetic signals. Although shown as having two optical assemblies 180A, 180B, the eyewear device 100 can include other arrangements, such as a single or three optical assemblies, or each optical assembly 180A, 180B may have arranged different arrangement depending on the application or intended user of the eyewear device 100.

As further shown in FIGS. 2A and 2B, eyewear device 100 includes a left corner 110A adjacent the left lateral side 170A of the frame 105 and a right corner 110B adjacent the right lateral side 170B of the frame 105. The corners 110A, 110B may be integrated into the frame 105 on the respective lateral sides 170A, 170B (as illustrated) or implemented as separate components attached to the frame 105 on the respective sides 170A, 170B. Alternatively, the corners 110A, 110B may be integrated into temples 125A, 125B attached to the frame 105.

In another example, the eyewear device 100 shown in FIG. 2B may include two projectors, a left projector 150A (not shown) and a right projector 150B (shown as projector 150). The left optical assembly 180A may include a left display matrix 177A (not shown) or a left set of optical strips **155'A**, 155'B, ... 155'N (155 prime, A through N, not shown) which are configured to interact with light from the left projector 150A. Similarly, the right optical assembly 180B may include a right display matrix 177B (not shown) or a right set of optical strips **155"A**, **155"B, ... 155"N (155** double prime, A through N, not shown) which are configured to interact with light from the right projector **150B.** In this example, the eyewear device **100** includes a left display and a right display.

FIG. 3 is a diagrammatic depiction of a three-dimensional scene **306,** a left raw image **302A** captured by a left visible-light camera **114A,** and a right raw image **302B** captured by a right visible-light camera **114B.** The left field of view **111A** may overlap, as shown, with the right field of view **111B.** The overlapping field of view **304** represents that portion of the image captured by both cameras **114A, 114B.** The term 'overlapping' when referring to field of view means the matrix of pixels in the generated raw images overlap by thirty percent (30%) or more. 'Substantially overlapping' means the matrix of pixels in the generated raw images - or in the infrared image of scene - overlap by fifty percent (50%) or more. As described herein, the two raw images **302A, 302B** may be processed to include a timestamp, which allows the images to be displayed together as part of a three-dimensional projection.

For the capture of stereo images, as illustrated in FIG. 3, a pair of raw red, green, and blue (RGB) images are captured of a real scene **306** at a given moment in time - a left raw image **302A** captured by the left camera **114A** and right raw image **302B** captured by the right camera **114B.** When the pair of raw images **302A, 302B** are processed (e.g., by the image processor 412), depth images are generated. The generated depth images may be viewed on an optical assembly **180A, 180B** of an eyewear device, on another display *(e.g.,* the image display **580** on a mobile device **401),** or on a screen.

The generated depth images are in the three-dimensional space domain and can comprise a matrix of vertices on a three-dimensional location coordinate system that includes an X axis for horizontal position *(e.g.,* length), a Y axis for vertical position *(e.g.,* height), and a Z axis for depth *(e.g.,* distance). Each vertex may include a color attribute *(e.g.,* a red pixel light value, a green pixel light value, or a blue pixel light value); a position attribute (e.g., an X location coordinate, a Y location coordinate, and a Z location coordinate); a texture attribute; a reflectance attribute; or a combination thereof. The texture attribute quantifies the perceived texture of the depth image, such as the spatial arrangement of color or intensities in a region of vertices of the depth image.

In one example, the interactive augmented reality system 400 (FIG. 4) includes the eyewear device 100, which includes a frame 105 and a left temple **110A** extending from a left lateral side 170A of the frame 105 and a right temple **125B** extending from a right lateral side 170B of the frame 105. The eyewear device 100 may further include at least two visible-light cameras **114A, 114B** having overlapping fields of view. In one example, the eyewear device **100** includes a left visible-light camera **114A** with a left field of view **111A,** as illustrated in FIG. 3. The left camera **114A** is connected to the frame **105** or the left temple **110A** to capture a left raw image **302A** from the left side of scene **306.** The eyewear device **100** further includes a right visible-light camera 114B with a right field of view 111B. The right camera 114B is connected to the frame 105 or the right temple 125B to capture a right raw image 302B from the right side of scene 306.

FIG. 4 is a functional block diagram of an example interactive augmented reality system 400 that includes a wearable device *(e.g.,* an eyewear device 100), a mobile device 401, and a server system 498 connected via various networks 495 such as the Internet. The interactive augmented reality system 400 includes a low-power wireless connection 425 and a high-speed wireless connection 437 between the eyewear device 100 and the mobile device 401.

As shown in FIG. 4, the eyewear device 100 includes one or more visible-light cameras 114A, 114B that capture still images, video images, or both still and video images, as described herein. The cameras 114A, 114B may have a direct memory access (DMA) to high-speed circuitry 430 and function as a stereo camera. The cameras 114A, 114B may be used to capture initial-depth images that may be rendered into three-dimensional (3D) models that are texture-mapped images of a red, green, and blue (RGB) imaged scene. The device 100 may also include a depth sensor (not shown), which uses infrared signals to estimate the position of objects relative to the device 100. The depth sensor in some examples includes one or more infrared emitter(s) 415 and infrared camera(s) 410.

The eyewear device 100 further includes two image displays of each optical assembly 180A, 180B (one associated with the left side 170A and one associated with the right side 170B). The eyewear device 100 also includes an image display driver 442, an image processor 412, low-power circuitry 420, and high-speed circuitry 430. The image displays of each optical assembly 180A, 180B are for presenting images, including still images, video images, or still and video images. The image display driver 442 is coupled to the image displays of each optical assembly 180A, 180B in order to control the display of images.

The eyewear device 100 additionally includes one or more speakers 440 (e.g., one associated with the left side of the eyewear device and another associated with the right side of the eyewear device). The speakers 440 may be incorporated into the frame 105, temples 125, or corners 110 of the eyewear device 100. The one or more speakers 440 are driven by audio processor 443 under control of low-power circuitry 420, high-speed circuitry 430, or both. The speakers 440 are for presenting audio signals including, for example, a beat track. The audio processor **443** is coupled to the speakers **440** in order to control the presentation of sound.

The components shown in FIG. 4 for the eyewear device **100** are located on one or more circuit boards, for example a printed circuit board (PCB) or flexible printed circuit (FPC), located in the rims or temples. Alternatively, or additionally, the depicted components can be located in the corners, frames, hinges, or bridge of the eyewear device **100.** Left and right visible-light cameras **114A, 114B** can include digital camera elements such as a complementary metal-oxide-semiconductor (CMOS) image sensor, a charge-coupled device, a lens, or any other respective visible or light capturing elements that may be used to capture data, including still images or video of scenes with unknown objects.

As shown in FIG. 4, high-speed circuitry **430** includes a high-speed processor **432,** a memory **434,** and high-speed wireless circuitry **436.** In the example, the image display driver **442** is coupled to the high-speed circuitry **430** and operated by the high-speed processor **432** in order to drive the left and right image displays of each optical assembly **180A, 180B.** High-speed processor **432** may be any processor capable of managing high-speed communications and operation of any general computing system needed for eyewear device **100.** High-speed processor **432** includes processing resources needed for managing high-speed data transfers on high-speed wireless connection 437 to a wireless local area network (WLAN) using high-speed wireless circuitry **436.**

In some examples, the high-speed processor **432** executes an operating system such as a LINUX operating system or other such operating system of the eyewear device **100** and the operating system is stored in memory 434 for execution. In addition to any other responsibilities, the high-speed processor **432** executes a software architecture for the eyewear device **100** that is used to manage data transfers with high-speed wireless circuitry **436.** In some examples, high-speed wireless circuitry **436** is configured to implement Institute of Electrical and Electronic Engineers (IEEE) **802.11** communication standards, also referred to herein as Wi-Fi. In other examples, other high-speed communications standards may be implemented by high-speed wireless circuitry **436.**

The low-power circuitry **420** includes a low-power processor **422** and low-power wireless circuitry **424.** The low-power wireless circuitry **424** and the high-speed wireless circuitry **436** of the eyewear device **100** can include short-range transceivers (Bluetooth^{™} or Bluetooth Low-Energy (BLE)) and wireless wide, local, or wide-area network transceivers (e.g., cellular or Wi-Fi). Mobile device **401,** including the transceivers communicating via the low-power wireless connection **425** and the high-speed wireless connection **437,** may be implemented using details of the architecture of the eyewear device **100,** as can other elements of the network **495.**

Memory **434** includes any storage device capable of storing various data and applications, including, among other things, camera data generated by the left and right visible-light cameras **114A, 114B,** the infrared camera(s) **410,** the image processor **412,** and images generated for display by the image display driver **442** on the image display of each optical assembly **180A, 180B.** Although the memory **434** is shown as integrated with high-speed circuitry **430,** the memory **434** in other examples may be an independent, standalone element of the eyewear device **100.** In certain such examples, electrical routing lines may provide a connection through a chip that includes the high-speed processor **432** from the image processor **412** or low-power processor **422** to the memory **434.** In other examples, the high-speed processor **432** may manage addressing of memory **434** such that the low-power processor **422** will boot the high-speed processor **432** any time that a read or write operation involving memory **434** is needed.

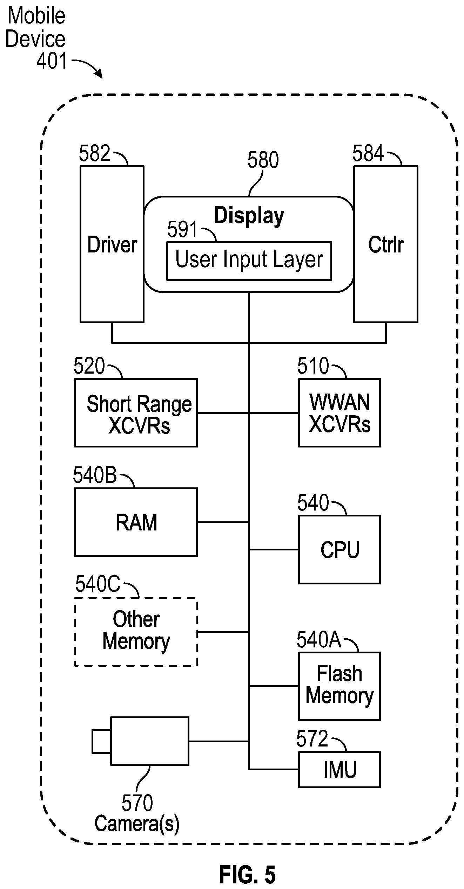

As shown in FIG. 4, the high-speed processor **432** of the eyewear device **100** can be coupled to the camera system (visible-light cameras **114A, 114B),** the image display driver **442,** the user input device **491,** and the memory **434.** As shown in FIG. 5, the CPU **540** of the mobile device **401** may be coupled to a camera system **570,** a mobile display driver **582,** a user input layer **591,** and a memory **540A.**

The server system **498** may be one or more computing devices as part of a service or network computing system, for example, that include a processor, a memory, and network communication interface to communicate over the network **495** with an eyewear device 100 and a mobile device **401.**

The output components of the eyewear device **100** include visual elements, such as the left and right image displays associated with each lens or optical assembly **180A, 180B** as described in FIGS. 2A and 2B (e.g., a display such as a liquid crystal display (LCD), a plasma display panel (PDP), a light emitting diode (LED) display, a projector, or a waveguide). The eyewear device **100** may include a user-facing indicator (e.g., an LED, a loudspeaker, or a vibrating actuator), or an outward-facing signal (e.g., an LED, a loudspeaker). The image displays of each optical assembly **180A, 180B** are driven by the image display driver **442.** In some example configurations, the output components of the eyewear device **100** further include additional indicators such as audible elements (e.g., loudspeakers), tactile components (e.g., an actuator such as a vibratory motor to generate haptic feedback), and other signal generators. For example, the device **100** may include a user-facing set of indicators, and an outward-facing set of signals. The user-facing set of indicators are configured to be seen or otherwise sensed by the user of the device **100.** For example, the device **100** may include an LED display positioned so the user can see it, a one or more speakers positioned to generate a sound the user can hear, or an actuator to provide haptic feedback the user can feel. The outward-facing set of signals are configured to be seen or otherwise sensed by an observer near the device **100.** Similarly, the device **100** may include an LED, a loudspeaker, or an actuator that is configured and positioned to be sensed by an observer.

The input components of the eyewear device **100** may include alphanumeric input components (e.g., a touch screen or touchpad configured to receive alphanumeric input, a photo-optical keyboard, or other alphanumeric-configured elements), pointer-based input components (e.g., a mouse, a touchpad, a trackball, a joystick, a motion sensor, or other pointing instruments), tactile input components (e.g., a button switch, a touch screen or touchpad that senses the location, force or location and force of touches or touch gestures, or other tactile-configured elements), and audio input components (e.g., a microphone), and the like. The mobile device **401** and the server system **498** may include alphanumeric, pointer-based, tactile, audio, and other input components.

In some examples, the eyewear device **100** includes a collection of motion-sensing components referred to as an inertial measurement unit **472.** The motion-sensing components may be micro-electro-mechanical systems (MEMS) with microscopic moving parts, often small enough to be part of a microchip. The inertial measurement unit (IMU) **472** in some example configurations includes an accelerometer, a gyroscope, and a magnetometer. The accelerometer senses the linear acceleration of the device **100** (including the acceleration due to gravity) relative to three orthogonal axes (x, y, z). The gyroscope senses the angular velocity of the device **100** about three axes of rotation (pitch, roll, yaw). Together, the accelerometer and gyroscope can provide position, orientation, and motion data about the device relative to six axes (x, y, z, pitch, roll, yaw). The magnetometer, if present, senses the heading of the device **100** relative to magnetic north. The position of the device **100** may be determined by location sensors, such as a GPS unit **473,** one or more transceivers to generate relative position coordinates, altitude sensors or barometers, and other orientation sensors. Such positioning system coordinates can also be received over the wireless connections **425, 437** from the mobile device **401** via the low-power wireless circuitry **424** or the high-speed wireless circuitry **436.**

The IMU **472** may include or cooperate with a digital motion processor or programming that gathers the raw data from the components and compute a number of useful values about the position, orientation, and motion of the device **100.** For example, the acceleration data gathered from the accelerometer can be integrated to obtain the velocity relative to each axis (x, y, z); and integrated again to obtain the position of the device **100** (in linear coordinates, x, y, and z). The angular velocity data from the gyroscope can be integrated to obtain the position of the device **100** (in spherical coordinates). The programming for computing these useful values may be stored in memory **434** and executed by the high-speed processor **432** of the eyewear device **100.**

The eyewear device **100** may optionally include additional peripheral sensors, such as biometric sensors, specialty sensors, or display elements integrated with eyewear device **100.** For example, peripheral device elements may include any I/O components including output components, motion components, position components, or any other such elements described herein. For example, the biometric sensors may include components to detect expressions (e.g., *hand* expressions, facial expressions, vocal expressions, body gestures, or eye tracking), to measure bio signals (e.g., blood pressure, heart rate, body temperature, perspiration, or brain waves), or to identify a person (e.g., identification based on voice, retina, facial characteristics, fingerprints, or electrical bio signals such as electroencephalogram data), and the like.

The mobile device **401** may be a smartphone, tablet, laptop computer, access point, or any other such device capable of connecting with eyewear device **100** using both a low-power wireless connection **425** and a high-speed wireless connection **437.** Mobile device **401** is connected to server system **498** and network **495.** The network **495** may include any combination of wired and wireless connections.

The interactive augmented reality system **400,** as shown in FIG. 4, includes a computing device, such as mobile device **401,** coupled to an eyewear device **100** over a network. The interactive augmented reality system **400** includes a memory for storing instructions and a processor for executing the instructions. Execution of the instructions of the interactive augmented reality system **400** by the processor **432** configures the eyewear device **100** to cooperate with the mobile device **401.** The interactive augmented reality system **400** may utilize the memory 434 of the eyewear device 100 or the memory elements **540A, 540B, 540C** of the mobile device 401 (FIG. 5). Also, the interactive augmented reality system 400 may utilize the processor elements **432, 422** of the eyewear device 100 or the central processing unit (CPU) 540 of the mobile device 401 (FIG. 5). In addition, the interactive augmented reality system 400 may further utilize the memory and processor elements of the server system 498. In this aspect, the memory and processing functions of the interactive augmented reality system 400 can be shared or distributed across the eyewear device 100, the mobile device 401, and the server system 498.

The memory 434 includes song files 482 and objects 484. The song files 482 includes a tempo (e.g., beat track) and, optionally, a sequence of notes and note values. A note is a symbol denoting a particular pitch or other musical sound. The note value includes the duration the note is played, relative to the tempo, and may include other qualities such as loudness, emphasis, articulation, and phrasing relative to other notes. The tempo, in some implementations, includes a default value along with a user interface through which the user may select a particular tempo for use during playback of the song. The objects **484** include image data for identifying objects or features in images captured by the cameras 114. The objects may be physical features such as known paintings or physical markers for use in localizing the eyewear device 100 within an environment.

The memory 434 additionally includes, for execution by the processor 432, a position detection utility 460, a marker registration utility 462, a localization utility 464, a virtual object rendering utility 466, a physics engine 468, and a prediction engine 470. The position detection utility 460 configures the processor 432 to determine the position (location and orientation) within an environment, e.g., using the localization utility 464. The marker registration utility 462 configures the processor 432 to register markers within the environment. The markers may be predefined physical markers having a known location within an environment or assigned by the processor 432 to a particular location with respect to the environment within which the eyewear device 100 is operating or with respect to the eyewear itself. The localization utility 464 configures the processor 432 to obtain localization data for use in determining the position of the eyewear device 100, objects presented by the eyewear device, or a combination thereof. The location data may be derived from a series of images, an IMU unit 472, a GPS unit 473, or a combination thereof. The virtual object rendering utility 466 configures the processor 432 to render virtual images for display by the image display 180 under control of the image display driver 442 and the image processor 412. The physics engine 468 configures the processor 432 to apply laws of physics such as gravity and friction to the virtual word, e.g., between virtual game pieces. The prediction engine 470 configures the processor 432 to predict anticipated movement of an object such as the eyewear device 100 based on its current heading, input from sensors such as the IMU 472, images of the environment, or a combination thereof.

FIG. 5 is a high-level functional block diagram of an example mobile device 401. Mobile device 401 includes a flash memory 540A which stores programming to be executed by the CPU 540 to perform all or a subset of the functions described herein.

The mobile device 401 may include a camera 570 that comprises at least two visible-light cameras (first and second visible-light cameras with overlapping fields of view) or at least one visible-light camera and a depth sensor with substantially overlapping fields of view. Flash memory 540A may further include multiple images or video, which are generated via the camera 570.

As shown, the mobile device 401 includes an image display 580, a mobile display driver 582 to control the image display 580, and a display controller 584. In the example of FIG. 5, the image display 580 includes a user input layer 591 *(e.g.,* a touchscreen) that is layered on top of or otherwise integrated into the screen used by the image display 580.

Examples of touchscreen-type mobile devices that may be used include (but are not limited to) a smart phone, a personal digital assistant (PDA), a tablet computer, a laptop computer, or other portable device. However, the structure and operation of the touchscreen-type devices is provided by way of example; the subject technology as described herein is not intended to be limited thereto. For purposes of this discussion, FIG. 5 therefore provides a block diagram illustration of the example mobile device 401 with a user interface that includes a touchscreen input layer 591 for receiving input (by touch, multi-touch, or gesture, and the like, by hand, stylus or other tool) and an image display 580 for displaying content

As shown in FIG. 5, the mobile device 401 includes at least one digital transceiver (XCVR) 510, shown as WWAN XCVRs, for digital wireless communications via a wide-area wireless mobile communication network. The mobile device 401 also includes additional digital or analog transceivers, such as short-range transceivers (XCVRs) 520 for short-range network communication, such as via NFC, VLC, DECT, ZigBee, Bluetooth^{™}, or Wi-Fi. For example, short range XCVRs 520 may take the form of any available two-way wireless local area network (WLAN) transceiver of a type that is compatible with one or more standard protocols of communication implemented in wireless local area networks, such as one of the Wi-Fi standards under IEEE 802.11.

To generate location coordinates for positioning of the mobile device 401, the mobile device 401 can include a global positioning system (GPS) receiver. Alternatively, or additionally the mobile device 401 can utilize either or both the short range XCVRs 520 and WWAN XCVRs **510** for generating location coordinates for positioning. For example, cellular network, Wi-Fi, or Bluetooth^{™} based positioning systems can generate very accurate location coordinates, particularly when used in combination. Such location coordinates can be transmitted to the eyewear device over one or more network connections via XCVRs **510, 520.**

The transceivers ***510, 520** (i.e.,* the network communication interface) conforms to one or more of the various digital wireless communication standards utilized by modern mobile networks. Examples of WWAN transceivers **510** include (but are not limited to) transceivers configured to operate in accordance with Code Division Multiple Access (CDMA) and 3rd Generation Partnership Project (3GPP) network technologies including, for example and without limitation, 3GPP type 2 (or 3GPP2) and LTE, at times referred to as "4G." For example, the transceivers **510, 520** provide two-way wireless communication of information including digitized audio signals, still image and video signals, web page information for display as well as web-related inputs, and various types of mobile message communications to/from the mobile device **401.**

The mobile device 401 further includes a microprocessor that functions as a central processing unit (CPU); shown as CPU 540 in FIG. 5. A processor is a circuit having elements structured and arranged to perform one or more processing functions, typically various data processing functions. Although discrete logic components could be used, the examples utilize components forming a programmable CPU. A microprocessor for example includes one or more integrated circuit (IC) chips incorporating the electronic elements to perform the functions of the CPU. The CPU 540, for example, may be based on any known or available microprocessor architecture, such as a Reduced Instruction Set Computing (RISC) using an ARM architecture, as commonly used today in mobile devices and other portable electronic devices. Of course, other arrangements of processor circuitry may be used to form the CPU 540 or processor hardware in smartphone, laptop computer, and tablet.

The CPU **540** serves as a programmable host controller for the mobile device **401** by configuring the mobile device **401** to perform various operations, for example, in accordance with instructions or programming executable by CPU **540.** For example, such operations may include various general operations of the mobile device, as well as operations related to the programming for applications on the mobile device. Although a processor may be configured by use of hardwired logic, typical processors in mobile devices are general processing circuits configured by execution of programming.

The mobile device **401** includes a memory or storage system, for storing programming and data. In the example, the memory system may include a flash memory **540A,** a random-access memory (RAM) **540B,** and other memory components **540C,** as needed. The RAM **540B** serves as short-term storage for instructions and data being handled by the CPU 540, *e.g.,* as a working data processing memory. The flash memory **540A** typically provides longer-term storage.

Hence, in the example of mobile device 401, the flash memory **540A** is used to store programming or instructions for execution by the CPU 540. Depending on the type of device, the mobile device 401 stores and runs a mobile operating system through which specific applications are executed. Examples of mobile operating systems include Google Android, Apple iOS (for iPhone or iPad devices), Windows Mobile, Amazon Fire OS, RIM BlackBerry OS, or the like.

The processor 432 within the eyewear device 100 may construct a map of the environment surrounding the eyewear device **100,** determine a location of the eyewear device within the mapped environment, and determine a relative position of the eyewear device to one or more objects in the mapped environment. The processor **432** may construct the map and determine location and position information using a simultaneous localization and mapping (SLAM) algorithm applied to data received from one or more sensors. In the context of augmented reality, a SLAM algorithm is used to construct and update a map of an environment, while simultaneously tracking and updating the location of a device (or a user) within the mapped environment. The mathematical solution can be approximated using various statistical methods, such as particle filters, Kalman filters, extended Kalman filters, and covariance intersection.

Sensor data includes images received from one or both of the cameras **114A, 114B,** distance(s) received from a laser range finder, position information received from a GPS unit **473,** or a combination of two or more of such sensor data, or from other sensors providing data useful in determining positional information.

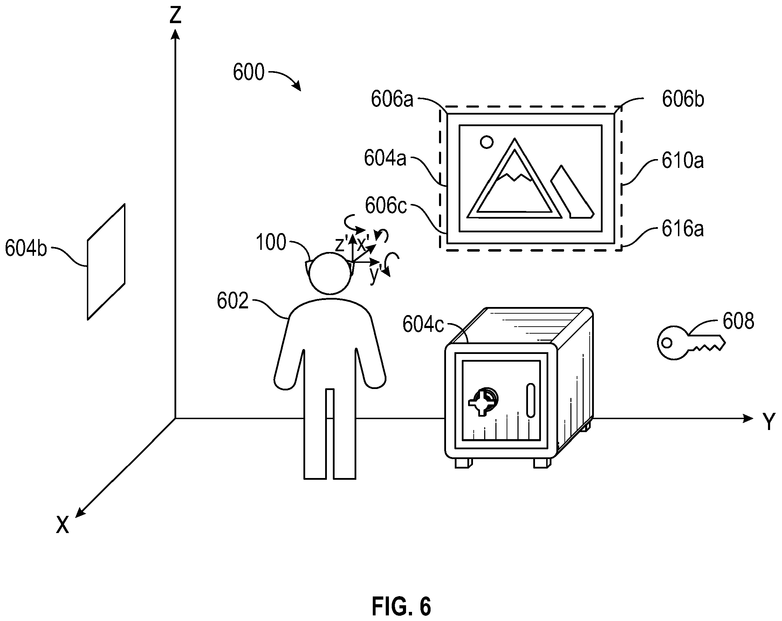

FIG. 6 depicts an example environment 600 along with elements that are useful for natural feature tracking (NFT; *e.g.,* a tracking application using a SLAM algorithm). A user 602 of eyewear device 100 is present in an example physical environment 600 (which, in FIG. 6, is an interior room). The processor 432 of the eyewear device 100 determines its position with respect to one or more objects 604 within the environment 600 using captured images, constructs a map of the environment 600 using a coordinate system (x, y, z) for the environment 600, and determines its position within the coordinate system. Additionally, the processor 432 determines a head pose (roll, pitch, and yaw) of the eyewear device 100 within the environment by using two or more location points (e.g., three location points 606a, 606b, and 606c) associated with a single object 604a, or by using one or more location points 606 associated with two or more objects **604a, 604b, 604c.** The processor **432** of the eyewear device **100** may position a virtual object **608** (such as the key shown in FIG. 6) within the environment **600** for augmented reality viewing via image displays 180.

Referring again to FIG. 6, the method of implementing interactive augmented reality applications described herein, in this example, includes a virtual marker 610a associated with a virtual object(s) **608** in the environment **600.** With respect to this example, the virtual object includes a person or people in the environment. In an AR system, markers are registered at locations in the environment to assist devices with the task of tracking and updating the location of users, devices, and objects (virtual and physical), and physical persons or people in a mapped environment. Markers are sometimes registered to a high-contrast physical object, such as the relatively dark object **604a** mounted on a lighter-colored wall, to assist cameras and other sensors with the task of detecting the marker. The markers may be preassigned or may be assigned by the eyewear device **100** upon entering the environment.

Markers can be encoded with or otherwise linked to information. A marker might include position information, a physical code (such as a bar code or a QR code; either visible to the user or hidden), or a combination thereof. A set of data associated with the marker is stored in the memory **434** of the eyewear device **100.** The set of data includes information about the marker **610a,** the marker's position (location and orientation), one or more objects, or a combination thereof. The marker position may include three-dimensional coordinates for one or more marker landmarks **616a,** such as the corner of the generally rectangular marker **610a** shown in FIG. 6. The marker location may be expressed relative to real-world geographic coordinates, a system of marker coordinates, a position of the eyewear device **100,** or other coordinate system. The one or more objects associated with the marker **610a** may include any of a variety of material, including still images, video, audio, tactile feedback, executable applications, interactive user interfaces and experiences, and combinations or sequences of such material. Any type of content capable of being stored in a memory and retrieved when the marker **610a** is encountered or associated with an assigned marker may be classified as a virtual object in this context. The key **608** shown in FIG. 6, for example, is a virtual object displayed as a still image, either 2D or 3D, at a marker location.

In one example, the marker **610a** may be registered in memory as being located near and associated with a physical object **604a** (e.g., the framed work of art shown in FIG. 6). In another example, the marker may be registered in memory as being a particular position with respect to the eyewear device **100.**

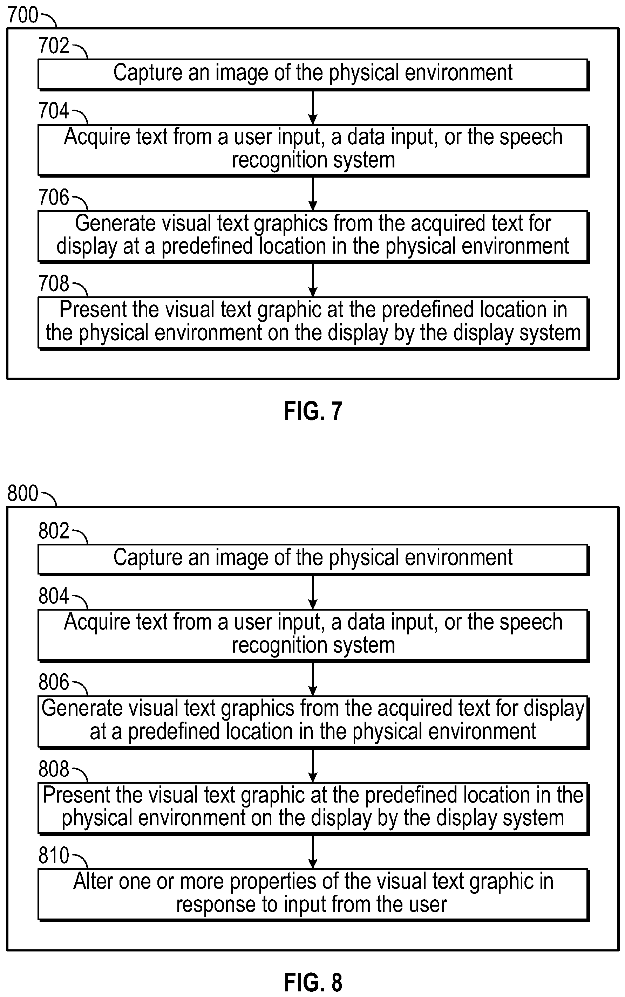

FIG. 7 is a flow chart **700** depicting a method for implementing augmented reality applications described herein on a wearable device (e.g., an eyewear device). Although the steps are described with reference to the eyewear device **100,** as described herein, other implementations of the steps described, for other types of devices, will be understood by one of skill in the art from the description herein. Additionally, it is contemplated that one or more of the steps shown in FIG. 7, and in other figures, and described herein may be omitted, performed simultaneously or in a series, performed in an order other than illustrated and described, or performed in conjunction with additional steps.

At block **702,** the eyewear device **100** captures one or more input images of a physical environment **600** near the eyewear device **100.** The processor **432** may continuously receive input images from the visible light camera(s) **114** and store those images in memory **434** for processing. Additionally, the eyewear device **100** may capture information from other sensors (e.g., location information from a GPS unit **473,** orientation information from an IMU **472,** or distance information from a laser distance sensor).

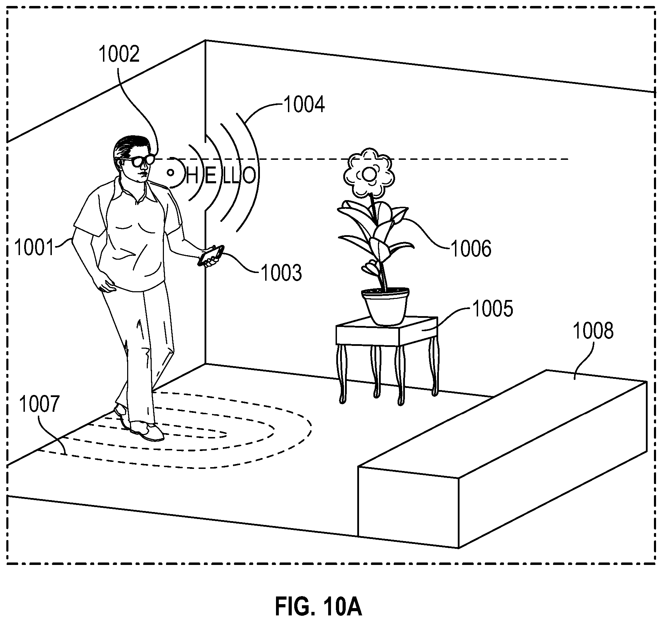

At block **704,** the eyewear device **100** acquires text from a user input, a data input, or the speech recognition system. The text may be inputted in one or more of several ways. The input may come from a user input device such as a keypade on a mobile device, such as a smartphone, that is connected with the eyewear device. The input may come from a mobile communication such as a text message from one of the people in the local environment, or from a remote user. The text may advantageously come from a voice recognition module of the eyewear device **100,** whereby speech from the user **1001** in the physical environment surrounding the user may be recorded as shown in FIG. 10A. In one embodiment, the device **100** includes a microphone, and the voice recognition module receives speech from the microphone. The processor may identify sound in the environment by comparing the sound to a sound pattern stored in memory **434,** identifying candidate sound patterns using a conventional voice recognition algorithm, comparing the candidate voice patterns to known voice patterns associated with particular persons in a voice database, and identifying matching voice patterns (identical or within a threshold) as a voice pattern corresponding to the person or people in the physical environment. The voice may be attributed to the user **1001** by directional listening capabilities or voice recognition capabilities **1001.** When a voice pattern has been attributed to a user **1001,** the eyewear device may include functionality to attribute voice recordings to that person using voice recognition. In one aspect, the user recognition may be used as a security feature to control access to operation of the eyewear device **100.**

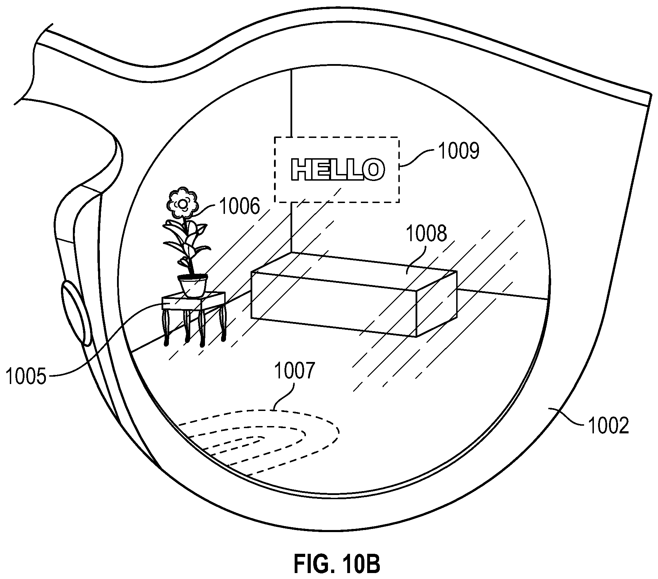

At block **706,** the eyewear device **100** generates visual text graphics from the acquired text for display at a predefined location in the physical environment. The visual text graphics may be any form of graphic such as a caption as shown in FIG. 10B. The text may include any type of graphical element such as emphasis, bold, italic, underlining, or word art, as well as emoticons.

At block **708,** the eyewear device **100** presents the visual text graphic at the predefined location in the physical environment on the display by the display system. The visual text graphic may be displayed near a person **1001** in the physical environment in which the text is attributed based on voice recognition, or for whom the text is placed by the user according to their desired preference. Once the user attributes voice in the physical environment to a particular person, the voice pattern may be saved in memory to allow for automatic identification.

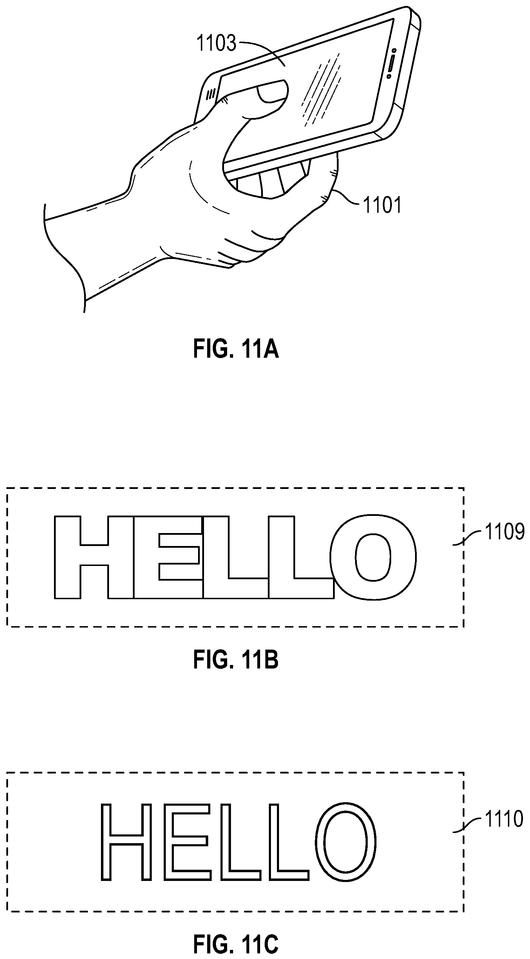

FIG. 8 is a flow chart **800** depicting a method for implementing augmented reality applications described herein on a wearable device (e.g., an eyewear device). The steps shown in Fig. 8 include steps **802, 804, 806, 808** which are similar to steps **702, 704, 706, 708** shown in Fig. 7. Fig. 8 includes an additional step **810** of altering one or more of the properties of the visual text graphic to a defined location in response to input from the user as shown in Figs. 11A-C.

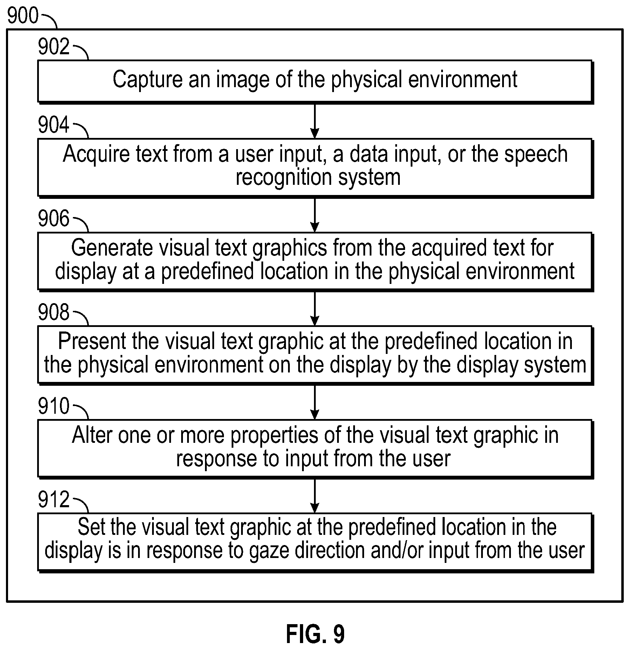

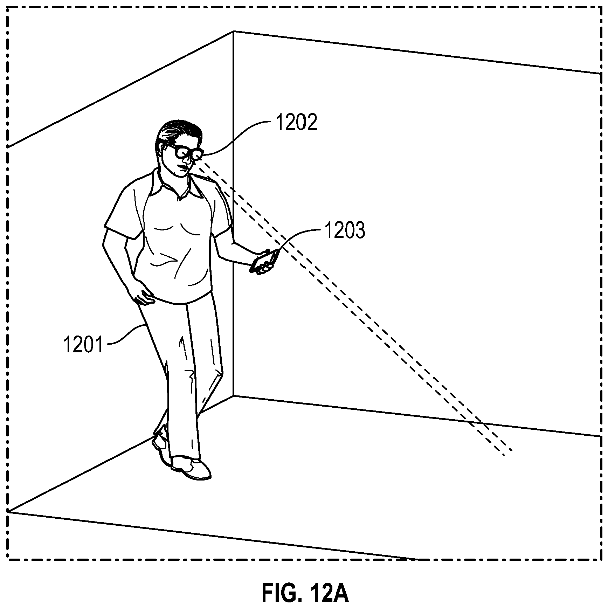

FIG. 9 is a flow chart **900** depicting a method for implementing augmented reality applications described herein on a wearable device (e.g., an eyewear device). The steps shown in Fig. 9 include steps **902, 904, 906, 908, 910** which are similar to steps **802, 804, 806, 808, and 810** shown in Fig. 8. Fig. 9 includes an additional step 912 of setting the visual text graphic at the predefined location in the display in response to gaze direction of the user, input from the user, or both as shown in Figs. 12A-B.

FIG. 10A is a perspective illustration of a virtual augmented reality experience using graphical text display where a user **1001** is wearing the eyewear device **1002,** which can be the eyewear device **100** described above. In accordance with the method steps described above in connection with FIG. 7, the eyewear device **1002** is configured to capture an image of the physical environment, corresponding to step 702. The physical environment may be an apartment, in which items such as a console **1008,** table **1005,** potted flower **1006** and rug **1007** may be present in the physical environment. The eyewear device may acquire text from a user input, a data input or the speech recognition system, corresponding to step **704.** In FIG. 10A, the user **1001** is speaking the words "Hello" as depicted by element **1004.** In one example, the eyewear device **1002** acquires in the form of text the words "Hello" using the speech recognition module, microphone, or both. In one example, the microphone is located on another device **1003** that is connected to the eyewear device **1002.** The speech recognition module may provide capability of identifying the user **1001** from among other people in the physical environment as described above.

FIG. 10B depicts the point of view of the user **1001** wearing the eyewear device **1002.** The lens and display device allows the user to view the physical environment, including the table **1005,** potted flower **1006, rug 1007,** and console **1008.** This view shows an example using the method shown in FIG. 7 where eyewear device **1002** generates visual text graphic **1009** from the acquired text and then presents the visual text graphic at the predefined location in the physical environment on the display by the display system. The visual text graphic **1009** may be set against the background image of the physical environment. In one example, the visual text graphic **1009** may be further positioned by direction of the user, and attributes of the visual text graphic **1009** may be altered as described below.

FIG. 11A shows further detail of the device **1103** that is in electronic communication with the eyewear device **1002.** In one example, the device **1103** is a smartphone that can be held in the hand of the user **1101.** The device can include inputs that allow manipulation of an attribute of the visual text graphic 1109. In one example, and the font of the visual text graphic 1109 may be altered by swiping left or swiping right on the screen of the device 1103. The visual text graphic 1109 may include a bold style font as shown in Fig. 11B. After swiping the device 1103, the font may change to another style 1110 as shown in Fig. 11C. The user 1101 can see the changed attribute in real time in the display of the eyewear device 1002. The attributes available can be arranged in a number of ways, including for example a menu of options that are set based on characteristics of the physical environment. For example, a range of colors observed by the display device may be matched to a motif such as a color pallet. The user 1101 then may swipe through attribute selections within the motif until a desired attribute is found.

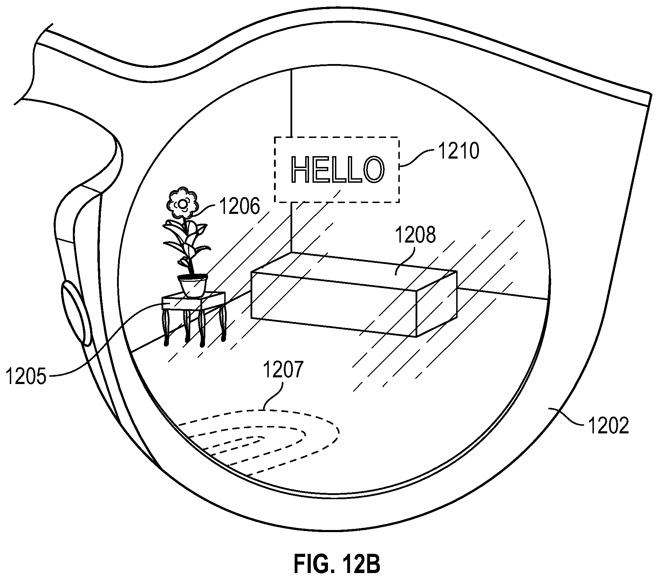

FIG. 12A is a perspective illustration of a virtual augmented reality experience using graphical text display when a user 1201 can set the visual text graphic 1210 by directing the gaze to the floor either alone or in combination with an input of the device 1203. At that point the visual text graphic 1210 will be set in place in the display of the eyewear device 1202. Thus, a user 1201 viewing the physical environment through the eyewear device 1202 will see the visual text graphic 1201 set in the desired location in the environment. In this case, the visual text graphic is fixed in space relative to the table 1205, plant 1206, rug 1207 and console 1208 as shown in Fig. 12 B.

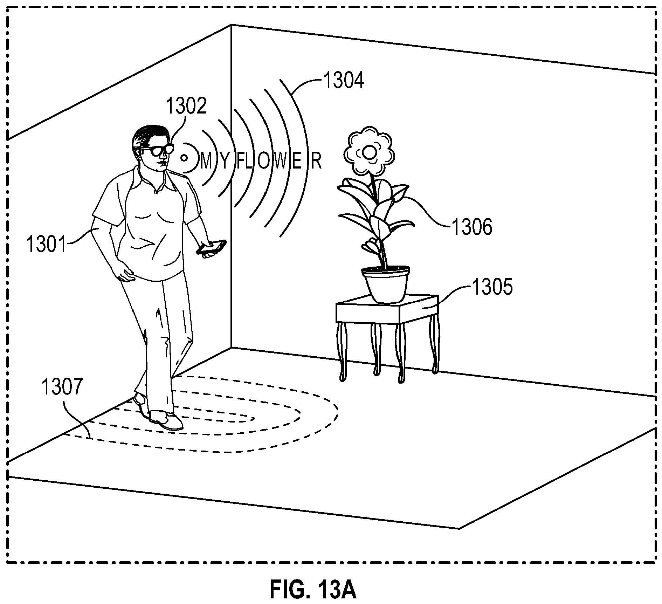

FIG. 13A is a perspective illustration of a virtual augmented reality experience using speech with visual text graphics. The user 1301 in this case may speak the words intended to be displayed as visual text graphics. Here, the physical environment includes a table 1305, plant 1306, and rug 1307. In this example, the user has spoken the works "My Flower." The eyewear device 1302 may include a microphone and speech recognition module that is configured to recognize speech 1304 of the user 1301. The spoken word into text that may be stored in memory.

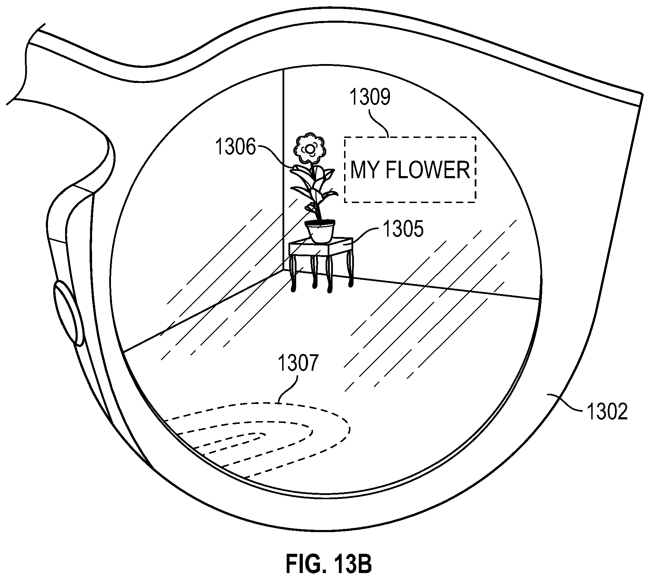

FIG. 13B shows the view through the display of the eyewear device 1302 where the text "My Flower" has been rendered as a visual display graphic 1309. The user may alter the attributes of the visual display graphic 1309 as shown above with respect to FIGs. 11A-C. The user 1301 may set the visual text graphic 1309 at a desired location as shown in FIG. 12A.

Any of the functionality described herein for the eyewear device 100, the mobile device 401, and the server system 498 can be embodied in one or more computer software applications or sets of programming instructions, as described herein. According to some examples, "function," "functions," "application," "applications," "instruction," "instructions," or "programming" are program(s) that execute functions defined in the programs. Various programming languages can be employed to develop one or more of the applications, structured in a variety of manners, such as object-oriented programming languages (e.g., Objective-C, Java, or C++) or procedural programming languages (e.g., C or assembly language). In a specific example, a third-party application (e.g., an application developed using the ANDROID^{™} or IOS^{™} software development kit (SDK) by an entity other than the vendor of the particular platform) may include mobile software running on a mobile operating system such as IOS^{™}, ANDROID^{™}, WINDOWS^{®} Phone, or another mobile operating systems. In this example, the third-party application can invoke API calls provided by the operating system to facilitate functionality described herein.

Hence, a machine-readable medium may take many forms of tangible storage medium. Non-volatile storage media include, for example, optical or magnetic disks, such as any of the storage devices in any computer devices or the like, such as may be used to implement the client device, media gateway, transcoder, etc. shown in the drawings. Volatile storage media include dynamic memory, such as main memory of such a computer platform. Tangible transmission media include coaxial cables; copper wire and fiber optics, including the wires that comprise a bus within a computer system. Carrier-wave transmission media may take the form of electric or electromagnetic signals, or acoustic or light waves such as those generated during radio frequency (RF) and infrared (IR) data communications. Common forms of computer-readable media therefore include for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer may read programming code or data. Many of these forms of computer readable media may be involved in carrying one or more sequences of one or more instructions to a processor for execution.

Except as stated immediately above, nothing that has been stated or illustrated is intended or should be interpreted to cause a dedication of any component, step, feature, object, benefit, advantage, or equivalent to the public, regardless of whether it is or is not recited in the claims.

It will be understood that the terms and expressions used herein have the ordinary meaning as is accorded to such terms and expressions with respect to their corresponding respective areas of inquiry and study except where specific meanings have otherwise been set forth herein. Relational terms such as first and second and the like may be used solely to distinguish one entity or action from another without necessarily requiring or implying any actual such relationship or order between such entities or actions. The terms "comprises," "comprising," "includes," "including," or any other variation thereof, are intended to cover a non-exclusive inclusion, such that a process, method, article, or apparatus that comprises or includes a list of elements or steps does not include only those elements or steps but may include other elements or steps not expressly listed or inherent to such process, method, article, or apparatus. An element preceded by "a" or "an" does not, without further constraints, preclude the existence of additional identical elements in the process, method, article, or apparatus that comprises the element.

Unless otherwise stated, any and all measurements, values, ratings, positions, magnitudes, sizes, and other specifications that are set forth in this specification, including in the claims that follow, are approximate, not exact. Such amounts are intended to have a reasonable range that is consistent with the functions to which they relate and with what is customary in the art to which they pertain. For example, unless expressly stated otherwise, a parameter value or the like may vary by as much as plus or minus ten percent from the stated amount or range.

In addition, in the foregoing Detailed Description, it can be seen that various features are grouped together in various examples for the purpose of streamlining the disclosure. This method of disclosure is not to be interpreted as reflecting an intention that the claimed examples require more features than are expressly recited in each claim. Rather, as the following claims reflect, the subject matter to be protected lies in less than all features of any single disclosed example. Thus, the following claims are hereby incorporated into the Detailed Description, with each claim standing on its own as a separately claimed subject matter.

While the foregoing has described what are considered to be the best mode and other examples, it is understood that various modifications may be made therein and that the subject matter disclosed herein may be implemented in various forms and examples, and that they may be applied in numerous applications, only some of which have been described herein.

## Claims

1. An augmented reality system comprising:
an image capture system (114A-B);
a display system (180A-B);
a speech recognition system;
a mobile device (401);
an eyewear device (100, 1002, 1202, 1302) comprising the image capture system (114A-B), the display system (180A-B), a processor (432), and a memory (434); and
programming in the memory (434), wherein execution of the programming by the processor (432) configures the eyewear device (100, 1002, 1202, 1302) to perform functions, including functions to:
capture (702, 802, 902) an image of a physical environment (600) using the image capture system (114A-B);
acquire (704, 804, 904) text from a user input, a data input, or the speech recognition system;
generate (706, 806, 906), using the display system (180A-B), visual text graphics from the acquired text;
set, using the display system, the visual text graphics at a predefined location relative to one or more items in the physical environment (600) in response to a first gaze direction of the user;
move, using the display system, the visual text graphics in the image from the predefined location relative to the one or more items in the physical environment (600) in response to a second gaze direction or a hand gesture of the user (602, 1001, 1101, 1201, 1301) ;
wherein execution of the programming by the processor configures the eyewear device (100, 1002, 1202, 1302) to enable manipulation of font style or color of the visual text graphics by providing a swipe input to the mobile device (401) to arrange attributes of the visual text graphic as a menu of options that are displayed on the display system based on characteristics of the physical environment.

2. The system of claim 1, wherein the visual text graphics are in the form of a caption.

3. The system of claim 1 or 2, further comprising a microphone and wherein the speech recognition system is configured to recognize speech received via the microphone and to convert the received speech to the text.

4. The system of claims 1-3, wherein the image capture system captures an image or a sequence of frames of video data, wherein the visual text graphics are added to the captured image or sequence of frames of video data and stored in the memory (434).

5. The system of claim 1, wherein the mobile device (401) is a smartphone that receives the swipe inputs for manipulation of font style or color of the visual text graphics and communicates a manipulated font style or color to the display system (180A-B).

6. The system of claim 1, wherein the display system (180A-B) includes a see-through display and the visual text graphics are presented on the see-through display.

7. An augmented reality method for use with an eyewear device (100, 1002, 1202, 1302) having an image capture system (114A-B), a speech recognition system, and a display system (180A-B), the method comprising:
capturing (702, 802, 902) an image of a physical environment using the image capture system (114A-B);
acquiring (704, 804, 904) text from a user input, a data input, or the speech recognition system;
generating (706, 806, 906), using the display system, visual text graphics from the acquired text;
setting, using the display system, the visual text graphics at a predefined location relative to one or more items in the physical environment (600) in response to a first gaze direction of the user;
moving, using the display system, the visual text graphics in the image from the predefined location relative to the one or more items in the physical environment in response to a second gaze direction or a hand gesture of the user; and
enabling manipulation of font style or color of the visual text graphics by providing a swipe input to a mobile device (401) to arrange attributes of the visual text graphics as a menu of options that are displayed on the display system based on characteristics of the physical environment.

8. The method of claim 7, wherein the visual text graphics are in the form of a caption.

9. The method of claim 7 or 8, wherein the eyewear device (100, 1002, 1202, 1302) further comprises a microphone and wherein the speech recognition system is configured to recognize speech received via the microphone and to convert the received speech to the text.

10. The method of claim 7-9, wherein the display system includes a see-through display supported by the eyewear device (100, 1002, 1202, 1302), further comprising:
presenting the visual text graphics on the see-through display.

11. The method of claim 7, further comprising enabling manipulation of font style or color of the visual text graphics by receiving a manipulated font style or color of the visual text graphics from a smartphone having a swipe interface adapted to manipulate the font style or color of the visual text graphics and displaying the manipulated font style or color on the display system (180A-B).

12. The method of claim 7, wherein capturing an image of the physical environment (600) comprises capturing, by the image capture system (114A-B), an image or a sequence of frames of video data, adding the visual text graphics to the captured image or sequence of frames of video data, and storing the captured image or sequence of frames of video data with added visual text graphics in a memory (434).

13. A non-transitory computer-readable medium storing program code which, when executed, is operative to cause an electronic processor (432) to perform the steps of any one of claims 7-10.

## Patentansprüche

1. System für erweiterte Realität, Folgendes umfassend:
ein Bildaufnahmesystem (114A-B),
ein Anzeigesystem (180A-B),
ein Spracherkennungssystem,
ein Mobilvorrichtung (401),
eine Brillenvorrichtung (100, 1002, 1202, 1302), die das Bildaufnahmesystem (114A-B), das Anzeigesystem (180A-B), einen Prozessor (432) und einen Speicher (434) umfasst, und
Programmierung in dem Speicher (434), wobei das Ausführen der Programmierung durch den Prozessor (432) die Brillenvorrichtung (100, 1002, 1202, 1302) zum Ausführen von Funktionen konfiguriert, einschließlich Funktionen für Folgendes:
Aufnehmen (702, 802, 902) eines Bildes einer physischen Umgebung (600) unter Verwendung des Bildaufnahmesystems (114A-B),
Erfassen (704, 804, 904) von Text von einer Benutzereingabe, einer Dateneingabe oder von dem Spracherkennungssystem,
Erzeugen (706, 806, 906) visueller Textgrafiken aus dem erfassten Text unter Verwendung des Anzeigesystems (180A-B),
Setzen der visuellen Textgrafiken an eine vordefinierte Stelle relativ zu einem oder mehreren Objekten in der physischen Umgebung (600) in Reaktion auf eine erste Blickrichtung des Benutzers unter Verwendung des Anzeigesystems,
Bewegen der visuellen Textgrafiken in dem Bild von der vordefinierten Stelle relativ zu dem einen oder den mehreren Objekten in der physischen Umgebung (600) in Reaktion auf eine zweite Blickrichtung oder eine Handgeste des Benutzers (602, 1001, 1101, 1201, 1301) unter Verwendung des Anzeigesystems,
wobei das Ausführen der Programmierung durch den Prozessor die Brillenvorrichtung (100, 1002, 1202, 1302) konfiguriert, das Beeinflussen von Schriftart oder - farbe der visuellen Textgrafiken zu ermöglichen, indem eine Wischeingabe in die Mobilvorrichtung (401) bereitgestellt wird, um Attribute der visuellen Textgrafiken als ein Menü von Optionen anzuordnen, die auf dem Anzeigesystem basierend auf Eigenschaften der physischen Umgebung angezeigt werden.

2. System nach Anspruch 1, wobei die visuellen Textgrafiken in Form einer Beschriftung vorliegen.

3. System nach Anspruch 1 oder 2, ferner ein Mikrofon umfassend und wobei das Spracherkennungssystem dafür konfiguriert ist, Sprache zu erkennen, die über das Mikrofon empfangen wird, und die empfangene Sprache in den Text umzuwandeln.

4. System nach den Ansprüchen 1 bis 3, wobei das Bildaufnahmesystem ein Bild oder eine Folge von Einzelbildern von Videodaten aufnimmt, wobei die visuellen Textgrafiken dem aufgenommenen Bild oder der aufgenommenen Folge von Einzelbildern von Videodaten hinzugefügt und in dem Speicher (434) gespeichert werden.

5. System nach Anspruch 1, wobei die Mobilvorrichtung (401) ein Smartphone ist, das die Wischeingaben zum Beeinflussen von Schriftart oder -farbe der visuellen Textgrafiken empfängt und eine beeinflusste Schriftart oder -farbe an das Anzeigesystem (180A-B) kommuniziert.

6. System nach Anspruch 1, wobei das Anzeigesystem (180AB) eine transparente Anzeige beinhaltet und visuellen Textgrafiken auf der transparenten Anzeige dargestellt werden.

7. Verfahren für erweiterte Realität zur Verwendung mit einer Brillenvorrichtung (100, 1002, 1202, 1302), die ein Bildaufnahmesystem (114A-B), ein Spracherkennungssystem und ein Anzeigesystem (180A-B) umfasst, wobei das Verfahren Folgendes umfasst:
Aufnehmen (702, 802, 902) eines Bildes einer physischen Umgebung (600) unter Verwendung des Bildaufnahmesystems (114A-B),
Erfassen (704, 804, 904) von Text von einer Benutzereingabe, einer Dateneingabe oder von dem Spracherkennungssystem,
Erzeugen (706, 806, 906) visueller Textgrafiken aus dem erfassten Text unter Verwendung des Anzeigesystems,
Setzen der visuellen Textgrafiken an eine vordefinierte Stelle relativ zu einem oder mehreren Objekten in der physischen Umgebung (600) in Reaktion auf eine erste Blickrichtung des Benutzers unter Verwendung des Anzeigesystems,
Bewegen der visuellen Textgrafiken in dem Bild von der vordefinierten Stelle relativ zu dem einen oder den mehreren Objekten in der physischen Umgebung in Reaktion auf eine zweite Blickrichtung oder eine Handgeste des Benutzers unter Verwendung des Anzeigesystems, und
Ermöglichen des Beeinflussens von Schriftart oder - farbe der visuellen Textgrafiken, indem eine Wischeingabe in eine Mobilvorrichtung (401) bereitgestellt wird, um Attribute der visuellen Textgrafiken als ein Menü von Optionen anzuordnen, die auf dem Anzeigesystem basierend auf Eigenschaften der physischen Umgebung angezeigt werden.

8. Verfahren nach Anspruch 7, wobei die visuellen Textgrafiken in Form einer Beschriftung vorliegen.

9. Verfahren nach Anspruch 7 oder 8, wobei die Brillenvorrichtung (100, 1002, 1202, 1302) ferner ein Mikrofon umfasst und wobei das Spracherkennungssystem dafür konfiguriert ist, Sprache zu erkennen, die über das Mikrofon empfangen wird, und die empfangene Sprache in den Text umzuwandeln.

10. Verfahren nach den Ansprüchen 7 bis 9, wobei das Anzeigesystem eine transparente Anzeige beinhaltet, die von der Brillenvorrichtung (100, 1002, 1202, 1302) gestützt wird, ferner Folgendes umfassend:
Darstellen der visuellen Textgrafiken auf der transparenten Anzeige.

11. Verfahren nach Anspruch 7, ferner umfassend das Beeinflussen von Schriftart oder -farbe der visuellen Textgrafiken durch Empfangen einer beeinflussten Schriftart oder -farbe der visuellen Textgrafiken von einem Smartphone, das eine Wischschnittstelle aufweist, die dafür eingerichtet ist, die Schriftart oder -farbe der visuellen Textgrafiken zu beeinflussen, und durch Anzeigen der beeinflussten Schriftart oder -farbe auf dem Anzeigesystem (180A-B).

12. Verfahren nach Anspruch 7, wobei das Aufnehmen eines Bildes der physischen Umgebung (600) das Aufnehmen eines Bildes oder einer Folge von Einzelbildern von Videodaten durch das Bildaufnahmesystem (114A-B), das Hinzufügen der visuellen Textgrafiken zu dem aufgenommenen Bild oder der aufgenommenen Folge von Einzelbildern von Videodaten und das Speichern des aufgenommenen Bildes oder der aufgenommenen Folge von Einzelbildern von Videodaten mit den hinzugefügten aufgenommenen in einem Speicher (434) umfasst.

13. Nicht-flüchtiges computerlesbares Speichermedium, das Programmcode speichert, der bei Ausführung funktionsfähig ist, einen elektronischen Prozessor (432) zu veranlassen, die Schritte von einem der Ansprüche 7 bis 10 durchzuführen.

## Revendications

1. Système de réalité augmentée comprenant :
un système de capture d'image (114A-B) ;
un système d'affichage (180A-B) ;
un système de reconnaissance vocale ;
un dispositif mobile (401) ;
un dispositif de lunetterie (100, 1002, 1202, 1302) comprenant le système de capture d'image (114A-B), le système d'affichage (180A-B), un processeur (432), et une mémoire (434) ; et
une programmation dans la mémoire (434), dans lequel l'exécution de la programmation par le processeur (432) configure le dispositif de lunetterie (100, 1002, 1202, 1302) pour exécuter des fonctions, incluant des fonctions consistant à :
capturer (702, 802, 902) une image d'un environnement physique (600) en utilisant le système de capture d'image (114A-B) ;
acquérir (704, 804, 904) un texte à partir d'une entrée utilisateur, d'une entrée de données, ou du système de reconnaissance vocale ;
générer (706, 806, 906), en utilisant le système d'affichage (180A-B), des graphiques de texte visuel à partir du texte acquis ;
positionner, en utilisant le système d'affichage, les graphiques de texte visuel à un emplacement prédéfini par rapport à un ou plusieurs éléments de l'environnement physique (600) en réponse à une première direction du regard de l'utilisateur ;
déplacer, en utilisant le système d'affichage, les graphiques de texte visuel dans l'image depuis l'emplacement prédéfini par rapport à l'un ou aux plusieurs éléments de l'environnement physique (600) en réponse à une seconde direction du regard ou à un geste de la main de l'utilisateur (602, 1001, 1101, 1201, 1301) ;
dans lequel l'exécution de la programmation par le processeur configure le dispositif de lunetterie (100, 1002, 1202, 1302) pour permettre une manipulation du style de police ou de la couleur des graphiques de texte visuel en fournissant une entrée par balayage au dispositif mobile (401) afin d'agencer des attributs du graphique de texte visuel sous la forme d'un menu d'options qui sont affichées sur le système d'affichage sur la base de caractéristiques de l'environnement physique.

2. Système selon la revendication 1, dans lequel les graphiques de texte visuel sont sous la forme d'un sous-titre.

3. Système selon la revendication 1 ou 2, comprenant en outre un microphone et dans lequel le système de reconnaissance vocale est configuré pour reconnaître une parole reçue via le microphone et pour transformer la parole reçue en texte.

4. Système selon l'une des revendications 1 à 3, dans lequel le système de capture d'image capture une image ou une séquence de trames de données vidéo, dans lequel les graphiques de texte visuel sont ajoutés à l'image capturée ou à la séquence de trames de données vidéo capturée et stockée dans la mémoire (434).

5. Système selon la revendication 1, dans lequel le dispositif mobile (401) est un téléphone intelligent qui reçoit les entrées par balayage pour la manipulation du style de police ou de la couleur des graphiques de texte visuel et communique un style de police ou une couleur manipulé(e) au système d'affichage (180A-B).

6. Système selon la revendication 1, dans lequel le système d'affichage (180A-B) inclut un afficheur transparent et les graphiques de texte visuel sont présentés sur l'afficheur transparent.

7. Procédé de réalité augmentée destiné à être utilisé avec un dispositif de lunetterie (100, 1002, 1202, 1302) ayant un système de capture d'image (114A-B), un système de reconnaissance vocale, et un système d'affichage (180A-B), le procédé comprenant :
la capture (702, 802, 902) d'une image d'un environnement physique en utilisant le système de capture d'image (114A-B) ;
l'acquisition (704, 804, 904) d'un texte à partir d'une entrée utilisateur, d'une entrée de données, ou du système de reconnaissance vocale ;
la génération (706, 806, 906), en utilisant le système d'affichage, de graphiques de texte visuel à partir du texte acquis ;
le positionnement, en utilisant le système d'affichage, des graphiques de texte visuel à un emplacement prédéfini par rapport à un ou plusieurs éléments de l'environnement physique (600) en réponse à une première direction du regard de l'utilisateur ;
le déplacement, en utilisant le système d'affichage, des graphiques de texte visuel dans l'image depuis l'emplacement prédéfini par rapport à l'un ou aux plusieurs éléments de l'environnement physique en réponse à une seconde direction du regard ou à un geste de la main de l'utilisateur ; et
le fait de permettre une manipulation du style de police ou de la couleur des graphiques de texte visuel en fournissant une entrée par balayage à un dispositif mobile (401) afin d'agencer des attributs des graphiques de texte visuel sous la forme d'un menu d'options qui sont affichées sur le système d'affichage sur la base de caractéristiques de l'environnement physique.

8. Procédé selon la revendication 7, dans lequel les graphiques de texte visuel sont sous la forme d'un sous-titre.

9. Procédé selon la revendication 7 ou 8, dans lequel le dispositif de lunetterie (100, 1002, 1202, 1302) comprend en outre un microphone et dans lequel le système de reconnaissance vocale est configuré pour reconnaître une parole reçue via le microphone et pour transformer la parole reçue en texte.

10. Procédé selon l'une quelconque des revendications 7 à 9, dans lequel le système d'affichage inclut un afficheur transparent supporté par le dispositif de lunetterie (100, 1002, 1202, 1302), comprenant en outre :
la présentation des graphiques de texte visuel sur l'afficheur transparent.

11. Procédé selon la revendication 7, comprenant en outre le fait de permettre une manipulation du style de police ou de la couleur des graphiques de texte visuel en recevant un style de police ou une couleur manipulé(e) des graphiques de texte visuel en provenance d'un téléphone intelligent ayant une interface à balayage conçue pour manipuler le style de police ou la couleur des graphiques de texte visuel et en affichant le style de police ou la couleur manipulé(e) sur le système d'affichage (180A-B).

12. Procédé selon la revendication 7, dans lequel la capture d'une image de l'environnement physique (600) comprend la capture, par le système de capture d'image (114A-B), d'une image ou d'une séquence de trames de données vidéo, l'ajout des graphiques de texte visuel à l'image capturée ou à la séquence de trames de données vidéo capturée, et le stockage de l'image capturée ou de la séquence de trames de données vidéo capturée avec les graphiques de texte visuel ajoutés dans une mémoire (434).

13. Support non transitoire lisible par ordinateur stockant un code de programme qui, lorsqu'il est exécuté, est opérationnel pour amener un processeur électronique (432) à mettre en œuvre les étapes de l'une quelconque des revendications 7 à 10.
